# EUROPÄISCHE PATENTSCHRIFT

(11) **EP 0 881 041 B1**
(45) Veröffentlichungstag und Bekanntmachung des Hinweises auf die Patenterteilung: **17.07.2002**
(21) Anmeldenummer: 98108326.4
(22) Anmeldetag: 07.05.1998
(51) Int. Cl.: B24B 39/04, B24B 5/42

(54) **Festwalzmaschine für Kurbelwellen**
Burnishing machine for crankshafts
Machine d'écrouissage pour vilbrequins

(30) Priorität: 28.05.1997 DE 19722308
(43) Veröffentlichungstag der Anmeldung: 02.12.1998
(73) Patentinhaber: Hegenscheidt-MFD GmbH & Co. KG, 41812 Erkelenz (DE)
(72) Erfinder: Gödderz, Dieter, 41812 Erkelenz (DE); Heimann, Alfred, Dr.-Ing., 52078 Aachen (DE); Heffe, Roland, 41352 Korschenbroich (DE); Jan en, Josef, 41063 Mönchengladbach (DE)
(74) Vertreter: Cohausz & Florack Patentanwälte

(56) Entgegenhaltungen:
- EP-A- 0 213 256
- DE-A- 3 333 603
- DE-U- 29 713 627
- US-A- 5 493 761

## Beschreibung

Die Erfindung bezieht sich auf eine Festwalzmaschine für Kurbelwellen, die eine Antriebsvorrichtung zum Drehantrieb einer festzuwalzenden Kurbelwelle und mindestens ein an einer Aufhängevorrichtung beweglich gelagertes Festwalzgerät in Scherenbauweise enthält, wobei die beiden Scherenarme eines jeden Festwalzgeräts an den der Drehachse der Antriebsvorrichtung zugewendeten Enden gegenüberliegend einen Festwalzrollenkopf und einen Stützrollenkopf tragen und an den der Drehachse der Antriebsvorrichtung abgewendeten Enden angetrieben werden und wobei jede Aufhängevorrichtung in Richtung der Drehachse der Antriebsvorrichtung verschiebbar ist, wobei zur Erzeugung der Schließ- und Öffnungsbewegung sowie der Festwalzkraft eines jeden Festwalzgeräts eine Antriebseinrichtung vorgesehen ist.

Eine derartige Festwalzmaschine geht von einer Einrichtung zum Fest- bzw. Glattwalzen von Kurbelwellen aus, wie sie durch die US 5 493 761 A bekannt ist.

Bei einer solchen Einrichtung wird eine Vorrichtung für das Einund Ausbringen von Kurbelwellen eingesetzt, die von einer Kurbelwellentransportvorrichtung einer Kurbelwellenbearbeitungsanlage beschickt und entleert wird.

Der Erfindung liegt die Aufgabe zugrunde, eine Festwalzmaschine der eingangs genannten Art so auszubilden, daß das Einbringen einer festzuwalzenden Kurbelwelle in die Maschine und das Ausbringen der festgewalzten Kurbelwelle aus der Maschine lediglich mit der Kurbelwellentransportvorrichtung einer Kurbelwellenbearbeitungsanlage durchgeführt werden können.

Erfindungsgemäß wird diese Aufgabe dadurch gelöst, daß die Antriebseinrichtung eine gegenüber dem doppelten Bauradius einer festzuwalzenden Kurbelwelle größere Öffnungsweite bewirkt, daß ein Scherenarm eines jeden Festwalzgeräts an einen Schenkel eines an der Aufhängevorrichtung schwenkbar angeordneten Winkelhebels angelenkt ist, daß der andere Schenkel des Winkelhebels an eine mit der Aufhängevorrichtung verbundene Kolbenzylindereinheit angeschlossen ist und daß den der Drehachse der Antriebsvorrichtung zugewendeten Enden der Scherenarme je eine Führung zugeordnet ist.

Vorzugsweise besteht die Antriebseinrichtung eines jeden Festwalzgeräts aus einem an einem Scherenarm gelagerten zweiarmigen Hebel, einem mit dem Scherenarm und dem ersten Arm des zweiarmigen Hebels verbundenen Verstellzylinder und einem mit dem anderen Scherenarm und dem zweiten Arm des zweiarmigen Hebels verbundenen Kraftgerät.

Das Kraftgerät ist mit mehreren quer zur Drehachse der Antriebsvorrichtung angeordneten Druckkolben ausgeführt.

Nach einem weiteren bevorzugten Merkmal der Erfindung ist die Kolbenzylindereinheit einer jeden Aufhängevorrichtung mit einer Klemmvorrichtung zum Festklemmen der Kolbenstange ausgebildet.

Zweckmäßigerweise ist jede Kolbenzylindereinheit ein Pneumatikzylinder.

Die der Drehachse der Antriebsvorrichtung zugewendeten Enden der Scherenarme sind mit je einer Führungsrolle versehen.

Zum Positionieren mehrerer Festwalzgeräte in ihre Vorschließstellung ist eine Positioniervorrichtung eingesetzt.

Bei einer anderen Ausführungsform ist zum Positionieren eines jeden Festwalzgeräts in seine Vorschließstellung ein Schwenkriegel an einer zugeordneten Führung vorgesehen.

Die Antriebsvorrichtung ist in Richtung ihrer Drehachse verschiebbar angeordnet.

Bei einer anderen Ausführungsform eines jeden Festwalzgeräts besteht die Antriebseinrichtung aus einem an einem Scherenarm gelagerten Winkelhebel, einer mit dem Scherenarm und einem Hebelarm des Winkelhebels verbundenen Kolbenzylinderanordnung, einem mit dem anderen Hebelarm des Winkelhebels und dem anderen Scherenarm gebildeten Kurvengetriebe und einer im öffnenden Sinne des Festwalzgeräts wirkenden Federeinheit.

Durch die Erfindung wird der Vorteil erzielt, daß die Festwalzgeräte zum Festwalzen von Kurbelwellen an den Übergangsradien der Hauptlager- und Pleuellagerzapfen bis auf einzelne Festwalzrollenköpfe gleich ausgeführt werden können.

Ein weiterer Vorteil ist darin zu sehen, daß sich die Aufhängevorrichtungen der Festwalzmaschine aus gleichen Einzelteilen zusammensetzen.

Eine erfindungsgemäße Festwalzmaschine zum Festwalzen von Kurbelwellen erlaubt vorteilhaft ein automatisches Einstellen der Pleuellagerzapfen-Festwalzgeräte auf verschiedene Kurbelwellentypen, deren Hub lediglich unterschiedlich ist.

Von Vorteil ist ferner die Verschiebbarkeit der Antriebsvorrichtung zum Drehantrieb, da hierdurch ein mehrstufiges Festwalzen von Hauptlager- und Pleuellagerzapfen, deren Anzahl größer als die Anzahl der Festwalzgeräte ist, ermöglicht wird.

Im folgenden wird die Erfindung anhand einer Zeichnung, in der ein Ausführungsbeispiel schematisch dargestellt ist, näher beschrieben.

Es zeigt
- Fig. 1: eine Festwalzmaschine mit einer von ihr aufgenommenen Kurbelwelle und neun geschlossenen Festwalzgeräten an fünf Hauptlager- und vier Pleuellagerzapfen im Grundriß,
- Fig. 1a: die von der Festwalzmaschine aufgenommene Kurbelwelle in vergrößertem Maßstab im Grundriß mit vier vergrößerten Einzelheiten W, X, Y und Z in Verbindung mit vier Teilschnitten von vier Festwalzrollenköpfen,
- Fig. 2a: einen Schnitt durch die Festwalzmaschine entsprechend der Linie II - II in Fig. 1 mit den Festwalzgeräten in ihrer geöffneten Ausgangsstellung,
- Fig. 2b: den Schnitt durch die Festwalzmaschine entsprechend der Linie II - II in Fig. 1 mit einer Teilansicht einer Kurbelwellentransportvorrichtung, wobei die Festwalzgeräte ihre Vorschließstellung gegenüber einer eingebrachten Kurbelwelle einnehmen,
- Fig. 2c: den Schnitt durch die Festwalzmaschine und die eingebrachte Kurbelwelle entsprechend der Linie II - II in Fig. 1 mit einem geschlossenen Festwalzgerät an einem Hauptlagerzapfen der Kurbelwelle,
- Fig. 2d: einen Teilausschnitt aus Fig. 2c in vergrößertem Maßstab mit Anordnung der Festwalzrolle gemäß Einzelheit W in Fig. 1a und zweier Stützrollen,
- Fig. 3: einen Schnitt durch die Festwalzmaschine und die eingebrachte Kurbelwelle entsprechend der Linie III - III in Fig. 1 mit einem geschlossenen Festwalzgerät an einem Pleuellagerzapfen und einer anderen Ausführungsform zum Positionieren des Festwalzgeräts in seine Vorschließstellung,
- Fig. 4: eine Teilansicht in Richtung des Pfeiles A in Fig. 3 in vergrößertem Maßstab,
- Fig. 5: einen Teilschnitt entsprechend der Linie V - V in Fig. 4,
- Fig. 6: eine andere Ausführungsform eines Festwalzgeräts in Ansicht mit einem Schnitt durch einen Hauptlagerzapfen einer Kurbelwelle,
- Fig. 7: das Festwalzgerät nach Fig. 6 in geschlossener Stellung an dem im Schnitt dargestellten Hauptlagerzapfen der Kurbelwelle.

Eine Festwalzmaschine 1 hat ein portalförmiges Gestell 2 mit einer Grundplatte 3, zwei Seitenteilen 4, 5 und einem Querträger 6. Die Seitenteile 4, 5 sind mit der Grundplatte 3 und dem Querträger 6 fest verbunden.

An dem Querträger 6 sind eine Antriebsvorrichtung 7 zum Drehantrieb einer jeden festzuwalzenden Kurbelwelle 8 und neun Aufhängevorrichtungen 9, 10, 11, 12, 13, 14, 15, 16, 17 mit je einem Festwalzgerät 18, 19, 20, 21, 22, 23, 24, 25, 26 angeordnet.

Die Drehachse der Antriebsvorrichtung 7, die mit 27 bezeichnet ist, verläuft parallel zum Querträger 6.

Die Antriebsvorrichtung 7 besitzt einen Spindelstock 28 und einen Reitstock 29, die einzeln und gemeinsam in Richtung der Drehachse 27 verschiebbar sind.

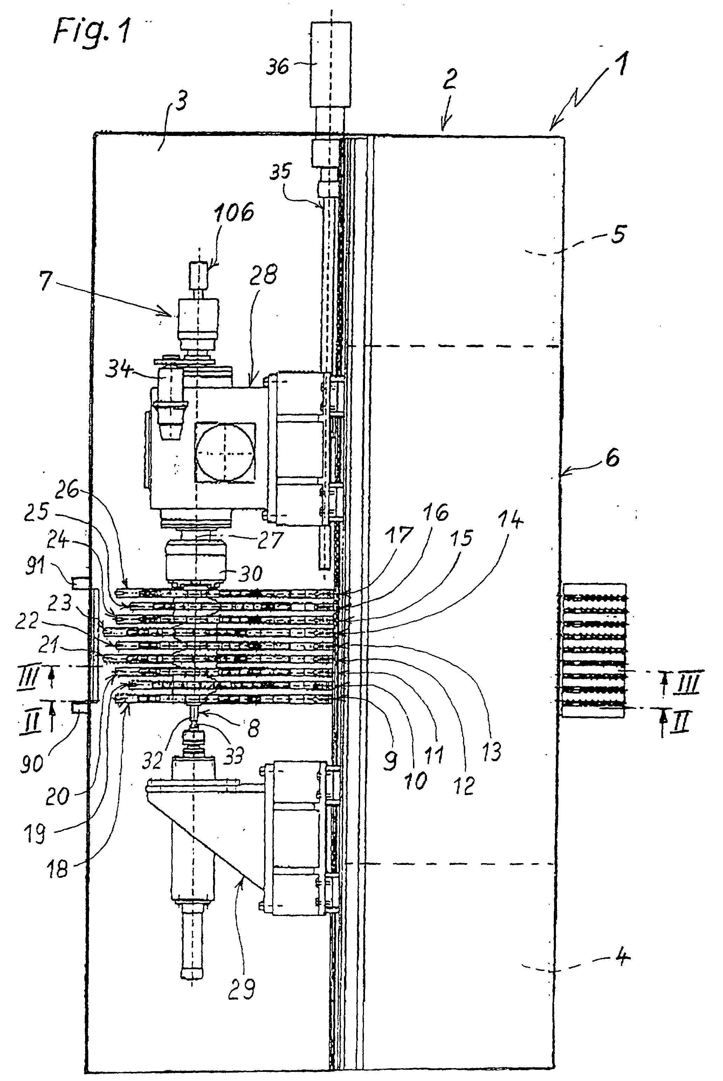

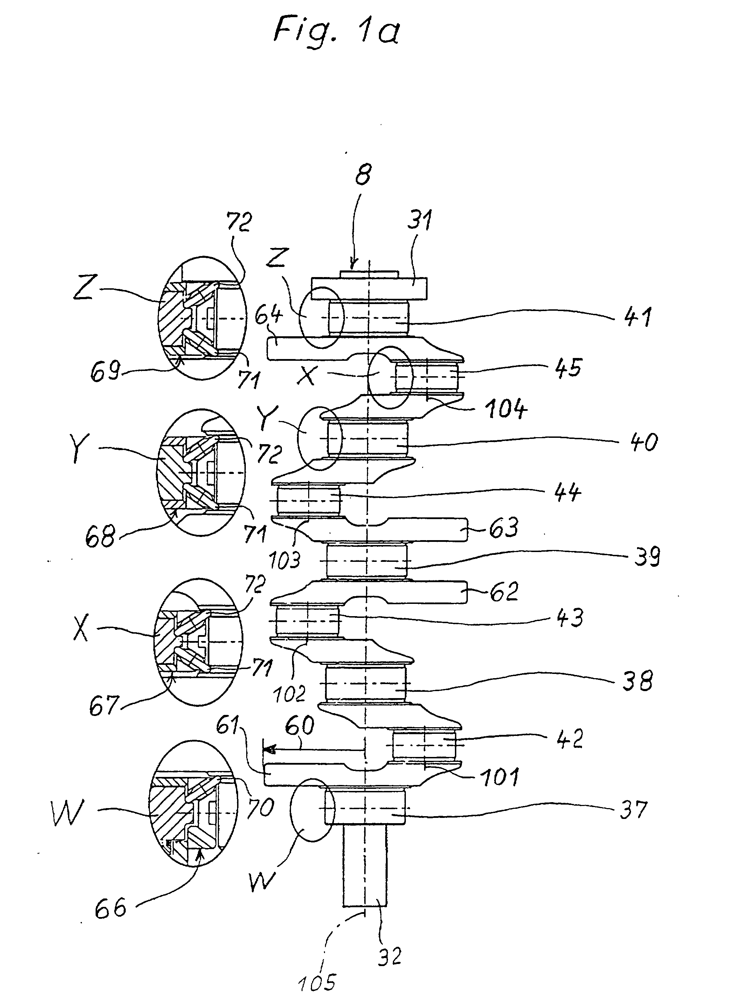

Ein Spannfutter 30 des Spindelstockes 28 dient der Einspannung und der Drehmitnahme des Endflansches 31 (Fig. 1a) einer festzuwalzenden Kurbelwelle 8.

Der Endzapfen 32 (Fig. 1a) einer festzuwalzenden Kurbelwelle 8 wird durch eine Körnerspitze 33 des Reitstocks 29 gehalten.

Die Drehbewegung des Spannfutters 30 und damit der festzuwalzenden Kurbelwelle 8 erzeugt ein Motor 34.

Das Verschieben des Spindelstocks 28 in Richtung der Drehachse 27 gewährleistet ein Gewindespindeltrieb 35, der von einem Getriebemotor 36 angetrieben wird.

Eine Kupplungsvorrichtung, die nicht dargestellt ist, bewirkt in eingeschaltetem Zustand ein gleichzeitiges Verschieben des Spindel- (28) und des Reitstocks 29.

Die Festwalzgeräte 18, 20, 22, 24, 26 sind für das Festwalzen der Hauptlagerzapfen 37, 38, 39, 40, 41 bestimmt, die Festwalzgeräte 19, 21, 23, 25 für das Festwalzen der Pleuellagerzapfen 42, 43, 44, 45.

Die Pleuellagerzapfen 42, 45 sind gegenüber den Pleuellagerzapfen 43, 44 um 180° versetzt.

Jedes Festwalzgerät 18 bis 26 ist in Scherenbauweise mit zwei Scherenarmen 46, 47, einem Scherendrehpunkt 48 und einer Antriebseinrichtung 49 ausgeführt.

Die Antriebseinrichtung 49, die an den der Drehachse 27 der Antriebsvorrichtung 7 abgewendeten Enden 50, 51 der Scherenarme 46, 47 angeordnet ist, besteht aus einem an dem Scherenarm 46 gelagerten zweiarmigen Hebel 52, einem mit dem Scherenarm 46 und dem ersten Arm 53 des zweiarmigen Hebels 52 verbundenen Verstellzylinder 54 und einem mit dem anderen Scherenarm 47 und dem zweiten Arm 55 des zweiarmigen Hebels 52 verbundenen Kraftgerät 56.

Das Kraftgerät 56 hat zwei Druckkolben 57 und einen Rückholkolben 58, die gemeinsam quer zur Drehachse 27 der Antriebsvorrichtung 7 angeordnet sind. Der Rückholkolben 58 schiebt bei geöffnetem Festwalzgerät 18 bis 26 die Druckkolben 57 stets zurück.

Die Antriebseinrichtung 49 eines jeden Festwalzgeräts 18 bis 26 ist so ausgelegt, daß der Verstellzylinder 54 die Schließ- und öffnungsbewegung bewirkt und das Kraftgerät 56 die Festwalzkraft erzeugt.

Die Öffnungsweite 59 eines jeden Festwalzgeräts 18 bis 26 ist größer als der doppelte Bauradius 60 einer festzuwalzenden Kurbelwelle 8. Im vorliegenden Ausführungsbeispiel ist der Bauradius 60 durch den Bauradius der Gegengewichte 61, 62, 63, 64 der Kurbelwelle 8 gegeben (Fig. 1a).

Die Festwalzgeräte 18 bis 26 sind jeweils an dem der Drehachse 27 der Antriebsvorrichtung 7 zugewendeten Ende 65 des Scherenarms 46 mit einem Festwalzrollenkopf bestückt, und zwar das Festwalzgerät 18 mit einem Festwalzrollenkopf 66, die Festwalzgeräte 19, 21, 23, 25 mit je einem Festwalzrollenkopf 67, die Festwalzgeräte 20, 22, 24 mit je einem Festwalzrollenkopf 68 und das Festwalzgerät 26 mit einem Festwalzrollenkopf 69.

Die Festwalzrollenköpfe 67, 68, 69 haben im Gegensatz zu dem Festwalzrollenkopf 66 nicht eine Festwalzrolle 70, sondern jeweils zwei Festwalzrollen 71, 72 (Fig. 1a).

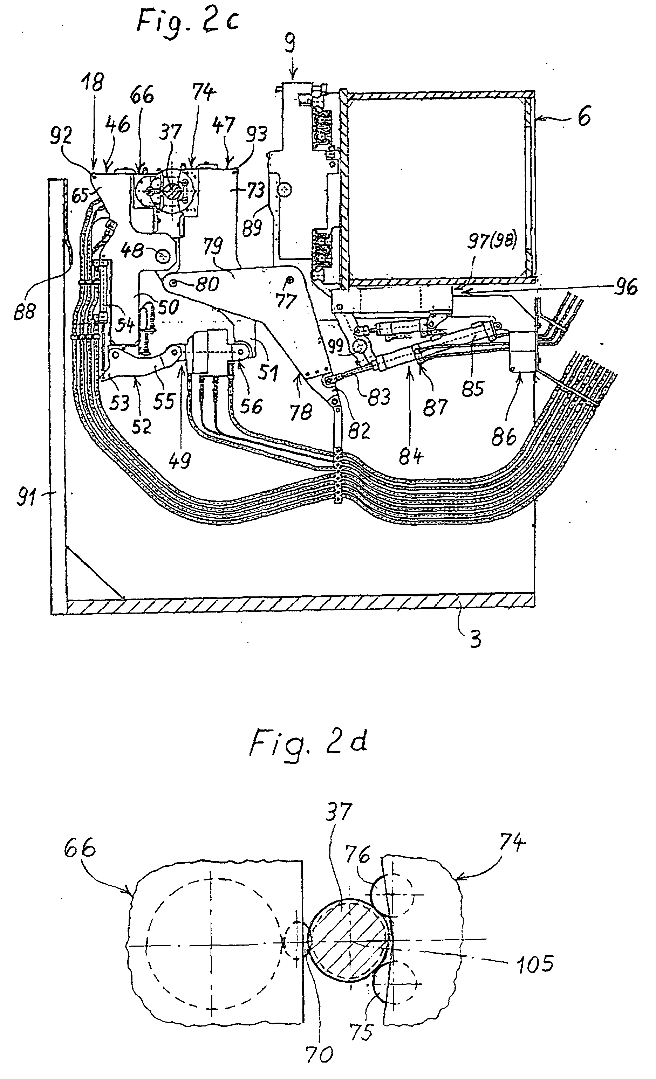

Jedes Festwalzgerät 18 bis 26 besitzt ferner an dem der Drehachse 27 der Antriebsvorrichtung 7 zugewendeten Ende 73 des Scherenarms 47 einen Stützrollenkopf 74 mit zwei Stützrollen 75, 76 (Fig. 2d).

Jede Aufhängevorrichtung 9 bis 17 hat einen um eine Achse 77 schwenkbaren Winkelhebel 78, von dem ein Schenkel 79 an den Scherenarm 47 eines Festwalzgeräts 18 bis 26 angelenkt ist.

Der Anlenkpunkt eines jeden Festwalzgeräts 18 bis 26, der mit 80 bezeichnet ist, liegt nach Möglichkeit in etwa auf der senkrechten Schwerlinie 81 des Schwerpunkts S.

Der andere Schenkel 82 eines jeden Winkelhebels 78 ist an die Kolbenstange 83 einer Kolbenzylindereinheit 84 angeschlossen.

Der Zylinder 85 einer jeden Kolbenzylindereinheit 84 ist jeweils mit dem Gehäuse 86 einer Aufhängevorrichtung 9 bis 17 verbunden.

Jede Kolbenzylindereinheit 84 ist ein Pneumatikzylinder mit einer Klemmvorrichtung 87 zum Festklemmen der Kolbenstange 83.

Während des Festwalzens einer Kurbelwelle 8 wirkt jeder Pneumatikzylinder wie eine Pneumatikfeder.

Den beiden Enden 65, 73 der Scherenarme 46, 47 ist je eine Führung 88, 89 zugeordnet.

Die Führung 88 ist an zwei an der Grundplatte 3 befestigten Vertikalholmen 90, 91 angeordnet.

Die Führung 89 ist Bestandteil des Gehäuses 86 einer jeden Aufhängevorrichtung 9 bis 17.

Beide Enden 65, 73 der Scherenarme 46, 47 eines jeden Festwalzgeräts 18 bis 26 sind mit je einer Führungsrolle 92, 93 versehen.

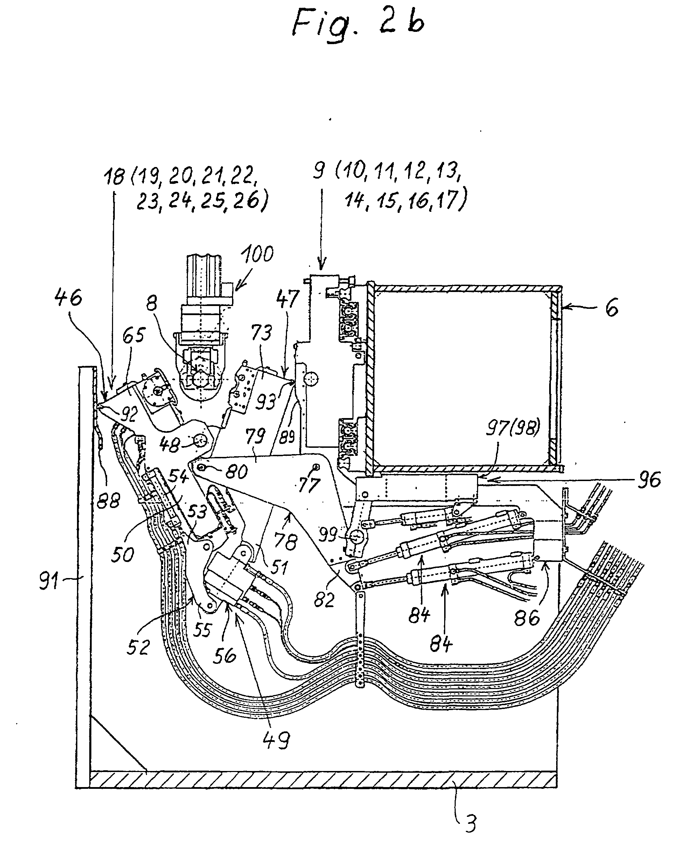

Zu Beginn des Festwalzens einer Serie von Kurbelwellen 8 nehmen alle neun Festwalzgeräte 18 bis 26 ihre in Fig. 2b dargestellte Vorschließstellung ein.

Dabei sind die Festwalzgeräte 18 bis 26 in Richtung der Drehachse 27 der Antriebsvorrichtung 7 auf die axiale Lage der Hauptlager- (37 bis 41) und der Pleuellagerzapfen 42 bis 45 eingestellt.

Das axiale Einstellen der Festwalzgeräte 18 bis 26 erfolgt über die verschiebbar angeordneten Aufhängevorrichtungen 9 bis 17, die je mit einem Ritzeltrieb 94 ausgeführt sind.

Jeder Ritzeltrieb 94, der von Hand betätigt wird, greift in eine mit dem Querträger 6 verbundene Zahnstange 95 ein.

Die Vorschließstellung aller Festwalzgeräte 18 bis 26 nach Fig. 2b wird erreicht mit Hilfe einer Positioniervorrichtung 96, die an dem Querträger 6 befestigt ist.

Die Positioniervorrichtung 96 hat zwei in Richtung der Drehachse 27 der Antriebsvorrichtung 7 versetzte Schwenkeinheiten 97, 98, deren Gleichlauf über eine mit den Schwenkeinheiten 97, 98 verbundene Rundstange 99 gewährleistet ist.

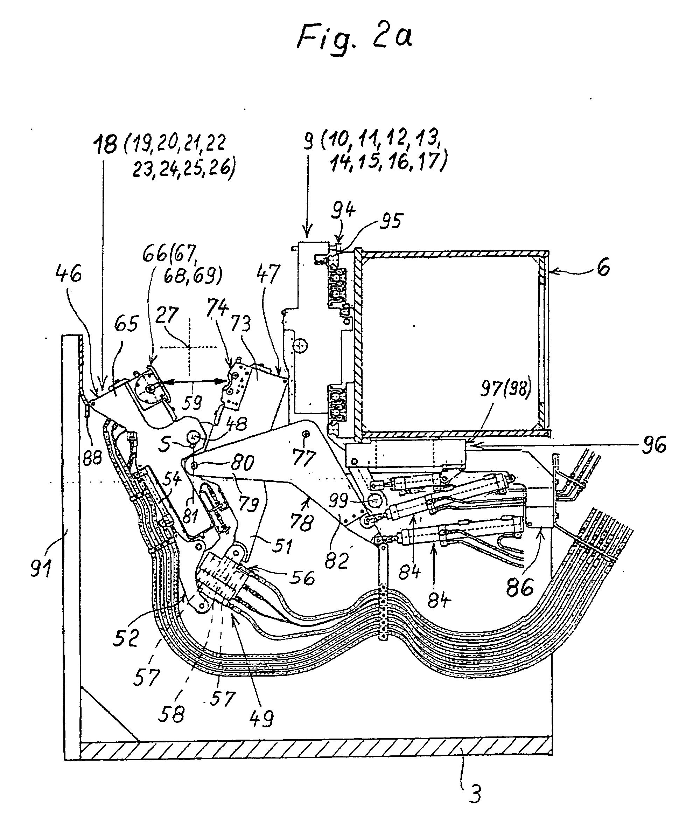

Die Schwenkeinheiten 97, 98 bewirken über die Rundstange 99 und die Schenkel 82 aller Winkelhebel 78 ein gleichzeitiges Verstellen der Festwalzgeräte 18 bis 26 aus ihrer Ausgangsstellung (Fig. 2a) in ihre Vorschließstellung (Fig. 2b).

Jede festzuwalzende Kurbelwelle 8 wird von einer Kurbelwellentransportvorrichtung 100 einer Kurbelwellenbearbeitungsanlage (zum Teil gegeben durch die Festwalzmaschine 1) in die Festwalzmaschine 1 so eingebracht, daß die Achsen 101, 102, 103, 104 der Pleuellagerzapfen 42 bis 45 und die Achse 105 der Hauptlagerzapfen 37 bis 41 in der durch die Drehachse 27 der Antriebsvorrichtung 7 gehenden Horizontalebene liegen.

Sobald die Festwalzmaschine 1 eine festzuwalzende Kurbelwelle 8 aufgenommen hat, werden gleichzeitig die Festwalzgeräte 18, 20, 22, 24, 26 an den Hauptlagerzapfen 37, 38, 39, 40, 41 und die Festwalzgeräte 19, 25 an den Pleuellagerzapfen 42, 45 geschlossen.

Die Festwalzgeräte 21, 23 zum Festwalzen der Pleuellagerzapfen 43, 44 werden zunächst in ihrer Vorschließstellung von zwei zugehörigen Kolbenzylindereinheiten 84 bei eingeschalteten Klemmvorrichtungen 87 gehalten und die Rundstange 99 der Positioniervorrichtung 96 in die in Fig. 2a dargestellte Position zurückgeschwenkt.

Während des Schließens der Festwalzgeräte 19, 25 an den Pleuellagerzapfen 42, 45 führt die aufgenommene Kurbelwelle 8 eine kleine Drehbewegung im Uhrzeigersinn (Fig. 2b) aus, da der Schwenkradius der Stützrollenköpfe 74 auf den Abstand zwischen den Hauptlagerzapfen 37 bis 41 und dem Anlenkpunkt 80 der Scherenarme 47 abgestellt ist.

Eine einstellbare Drehwinkelsteuereinheit 106 steuert nun den Spindelstock 28 in der Weise, daß die aufgenommene Kurbelwelle 8 um 180° gedreht wird.

In dieser Stellung der Kurbelwelle 8 werden die Festwalzgeräte 21, 23 an den Pleuellagerzapfen 43, 44 geschlossen und danach die vorher eingeschalteten Klemmvorrichtungen 87 ausgeschaltet.

Anschließend werden bei Drehung der Kurbelwelle 8 die Hauptlager- (37 bis 41) und die Pleuellagerzapfen 42 bis 45 unter Einwirkung einer Festwalzkraft festgewalzt.

Bei beendetem Festwalzen der Kurbelwelle 8 steuert die Drehwinkelsteuereinheit 106 den Spindelstock 28 so, daß die Kurbelwelle 8 wieder ihre Einbringlage einnimmt.

Hiernach werden nacheinander alle Klemmvorrichtungen 87 der Kolbenzylindereinheiten 84 eingeschaltet, alle Festwalzgeräte 18 bis 26 geöffnet und die festgewalzte Kurbelwelle 8 mit Hilfe der Kurbelwellentransportvorrichtung 100 aus der Festwalzmaschine 1 transportiert.

Die Festwalzmaschine 1 kann nun die nächste festzuwalzende Kurbelwelle 8 aufnehmen, wie bereits beschrieben.

Die Festwalzgeräte 18, 20, 22, 24, 26 für die Hauptlagerzapfen 37 bis 41 nehmen nach ihrer Öffnung eine Stellung ein, die mit ihrer Vorschließstellung übereinstimmt (Fig. 2b).

Dagegen erreichen die Festwalzgeräte 19, 21, 23, 25 für die Pleuellagerzapfen 42 bis 45 nach ihrer Öffnung eine Stellung, die aufgrund der geometrischen Verhältnisse etwas oberhalb ihrer in Fig. 2b dargestellten Vorschließstellung liegt.

Hierdurch können alle Festwalzgeräte 18 bis 26 an der aufgenommenen Kurbelwelle 8 gleichzeitig geschlossen werden.

Nach dem gleichzeitigen Schließen aller Festwalzgeräte 18 bis 26 werden nacheinander die Klemmvorrichtungen 87 der Kolbenzylindereinheiten 84 ausgeschaltet, die Kurbelwelle 8 in Drehung versetzt, die Hauptlager- (37 bis 41) und die Pleuellagerzapfen 42 bis 45 festgewalzt und die festgewalzte Kurbelwelle 8 in ihre Einbringlage gedreht.

Die festgewalzte Kurbelwelle 8 wird nun wie vorher mit Hilfe der Kurbelwellentransportvorrichtung 100 aus der Festwalzmaschine 1 transportiert.

Die Positioniervorrichtung 96 braucht somit nur beim Festwalzvorgang der ersten Kurbelwelle 8 einer Serie eingesetzt zu werden.

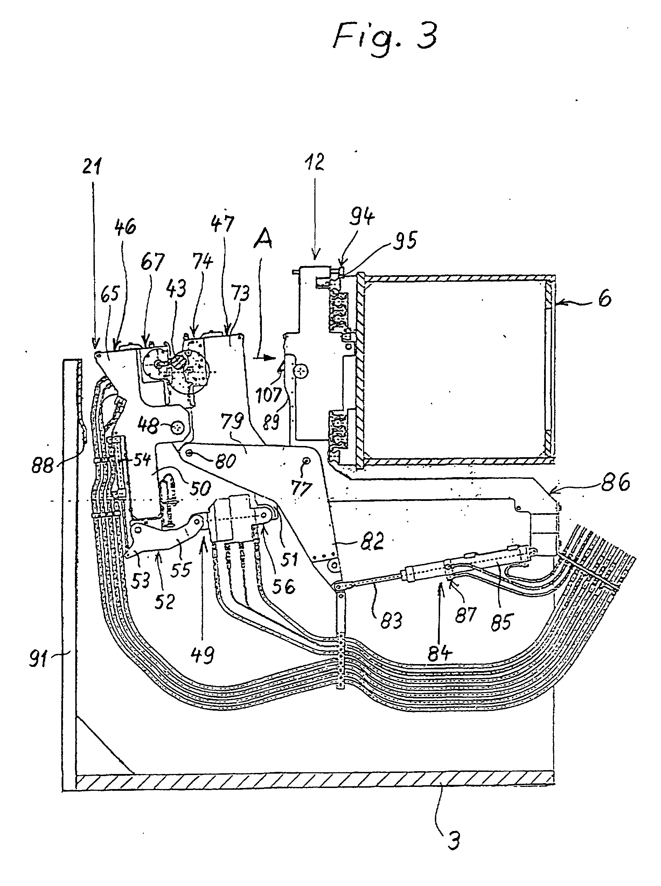

Eine Ausführungsvariante zu der Positioniervorrichtung 96 zeigen die Fig. 3, 4 und 5.

Zum Positionieren eines jeden Festwalzgeräts 18 bis 26 in seine Vorschließstellung (Fig. 2b) ist ein Schwenkriegel 107 an der Führung 89 einer jeden Aufhängevorrichtung 9 bis 17 angeordnet.

Jeder Schwenkriegel 107, der mit einer Blattfeder 108 in Wirkverbindung steht, ist um einen Bolzen 109 begrenzt schwenkbar.

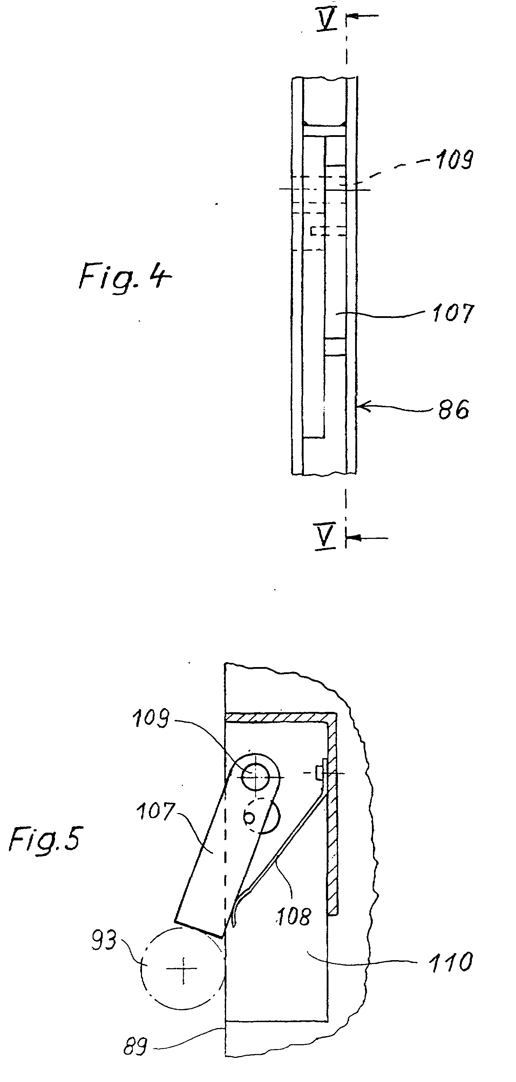

Der Schwenkriegel 107 ist in Riegelstellung (Fig. 5) als Anschlag für die Führungsrolle 93 aufzufassen, wenn sie an der Führung 89 aufwärts bewegt wird.

Bei der Abwärtsbewegung der Führungsrolle 93 an der Führung 89 und beim seitlichen Andrücken der Führungsrolle 93 an die Führung 89 ist der Schwenkriegel 107 funktionslos, da er hierbei in eine Ausnehmung 110 gedrückt wird.

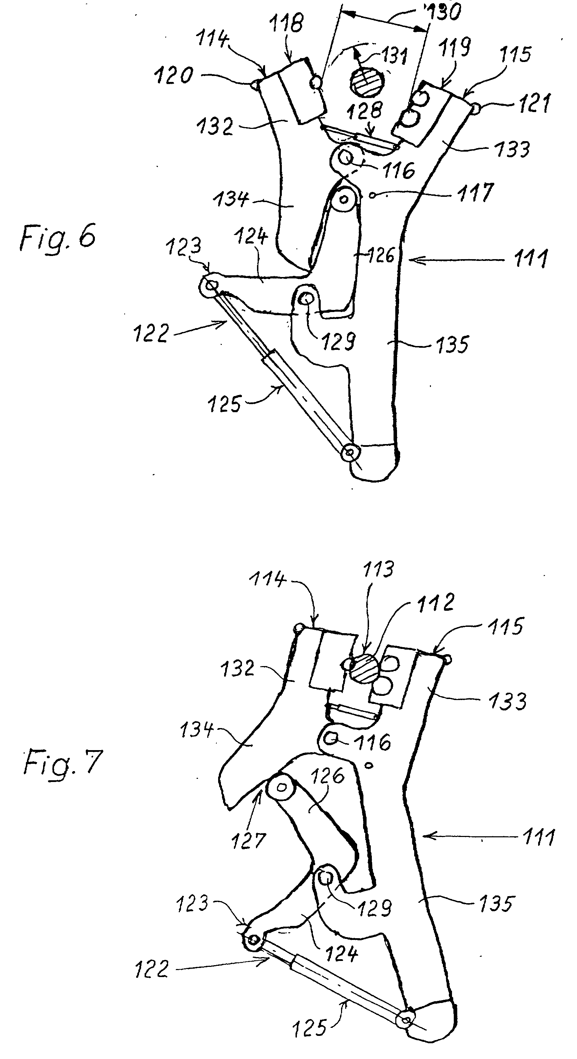

Die Fig. 6 und 7 zeigen schematisch ein Festwalzgerät 111 in einer anderen Ausführungsform mit einem Schnitt durch einen Hauptlagerzapfen 112 einer Kurbelwelle 113.

Ein Festwalzgerät 111 hat analog zu jedem Festwalzgerät 18 bis 26 zwei Scherenarme 114, 115, einen Scherendrehpunkt 116, einen Anlenkpunkt 117, einen Festwalzrollenkopf 118, einen Stützrollenkopf 119, zwei Führungsrollen 120, 121 und eine Antriebseinrichtung 122.

Die Antriebseinrichtung 122 besteht aus einem an dem Scherenarm 115 gelagerten Winkelhebel 123, einer mit dem Scherenarm 115 und einem Hebelarm 124 des Winkelhebels 123 verbundenen Kolbenzylinderanordnung 125, einem mit dem anderen Hebelarm 126 des Winkelhebels 123 und dem anderen Scherenarm 114 gebildeten Kurvengetriebe 127 und einer im öffnenden Sinne des Festwalzgeräts 111 wirkenden Federeinheit 128.

Der Winkelhebel 123 ist schwenkbar um einen Bolzen 129.

Das Festwalzgerät 111 hat eine Öffnungsweite 130, die größer ist als der doppelte Bauradius 131 der Kurbelwelle 113.

Die der Drehachse 27 der Antriebsvorrichtung 7 zugewendeten Enden der Scherenarme 114, 115 sind mit 132, 133 bezeichnet, die abgewendeten Enden der Scherenarme 114, 115 mit 134, 135.

### Bezugszeichenliste

- 1: Festwalzmaschine
- 2: Gestell
- 3: Grundplatte
- 4: Seitenteil
- 5: Seitenteil
- 6: Querträger
- 7: Antriebsvorrichtung
- 8: Kurbelwelle
- 9: Aufhängevorrichtung
- 10: Aufhängevorrichtung
- 11: Aufhängevorrichtung
- 12: Aufhängevorrichtung
- 13: Aufhängevorrichtung
- 14: Aufhängevorrichtung
- 15: Aufhängevorrichtung
- 16: Aufhängevorrichtung
- 17: Aufhängevorrichtung
- 18: Festwalzgerät
- 19: Festwalzgerät
- 20: Festwalzgerät
- 21: Festwalzgerät
- 22: Festwalzgerät
- 23: Festwalzgerät
- 24: Festwalzgerät
- 25: Festwalzgerät
- 26: Festwalzgerät
- 27: Drehachse
- 28: Spindelstock
- 29: Reitstock
- 30: Spannfutter
- 31: Endflansch
- 32: Endzapfen
- 33: Körnerspitze
- 34: Motor
- 35: Gewindespindeltrieb
- 36: Getriebemotor
- 37: Hauptlagerzapfen
- 38: Hauptlagerzapfen
- 39: Hauptlagerzapfen
- 40: Hauptlagerzapfen
- 41: Hauptlagerzapfen
- 42: Pleuellagerzapfen
- 43: Pleuellagerzapfen
- 44: Pleuellagerzapfen
- 45: Pleuellagerzapfen
- 46: Scherenarm
- 47: Scherenarm
- 48: Scherendrehpunkt
- 49: Antriebseinrichtung
- 50: Ende
- 51: Ende
- 52: Hebel
- 53: Arm
- 54: Verstellzylinder
- 55: Arm
- 56: Kraftgerät
- 57: Druckkolben
- 58: Rückholkolben
- 59: Öffnungsweite
- 60: Bauradius
- 61: Gegengewicht
- 62: Gegengewicht
- 63: Gegengewicht
- 64: Gegengewicht
- 65: Ende
- 66: Festwalzrollenkopf
- 67: Festwalzrollenkopf
- 68: Festwalzrollenkopf
- 69: Festwalzrollenkopf
- 70: Festwalzrolle
- 71: Festwalzrolle
- 72: Festwalzrolle
- 73: Ende
- 74: Stützrollenkopf
- 75: Stützrolle
- 76: Stützrolle
- 77: Achse
- 78: Winkelhebel
- 79: Schenkel
- 80: Anlenkpunkt
- 81: Schwerlinie
- 82: Schenkel
- 83: Kolbenstange
- 84: Kolbenzylindereinheit
- 85: Zylinder
- 86: Gehäuse
- 87: Klemmvorrichtung
- 88: Führung
- 89: Führung
- 90: Vertikalholm
- 91: Vertikalholm
- 92: Führungsrolle
- 93: Führungsrolle
- 94: Ritzeltrieb
- 95: Zahnstange
- 96: Positioniervorrichtung
- 97: Schwenkeinheit
- 98: Schwenkeinheit
- 99: Rundstange
- 100: Kurbelwellentransportvorrichtung
- 101: Achse
- 102: Achse
- 103: Achse
- 104: Achse
- 105: Achse
- 106: Drehwinkelsteuereinheit
- 107: Schwenkriegel
- 108: Blattfeder
- 109: Bolzen
- 110: Ausnehmung
- 111: Festwalzgerät
- 112: Hauptlagerzapfen
- 113: Kurbelwelle
- 114: Scherenarm
- 115: Scherenarm
- 116: Scherendrehpunkt
- 117: Anlenkpunkt
- 118: Festwalzrollenkopf
- 119: Stützrollenkopf
- 120: Führungsrolle
- 121: Führungsrolle
- 122: Antriebseinrichtung
- 123: Winkelhebel
- 124: Hebelarm
- 125: Kolbenzylinderanordnung
- 126: Hebelarm
- 127: Kurvengetriebe
- 128: Federeinheit
- 129: Bolzen
- 130: Öffnungsweite
- 131: Bauradius
- 132: Ende
- 133: Ende
- 134: Ende
- 135: Ende
- S: Schwerpunkt

## Patentansprüche

1. Festwalzmaschine für Kurbelwellen, die eine Antriebsvorrichtung (7) zum Drehantrieb einer festzuwalzenden Kurbelwelle und mindestens ein an einer Aufhängevorrichtung (9 - 17) beweglich gelagertes Festwalzgerät (18 - 26; 111) in Scherenbauweise enthält, wobei die beiden Scherenarme (46, 47; 114, 115) eines jeden Festwalzgeräts (18 - 26; 111) an den der Drehachse der Antriebsvorrichtung (7) zugewendeten Enden gegenüberliegend einen Festwalzrollenkopf (66, 69) und einen Stützrollenkopf (74) tragen und an den der Drehachse der Antriebsvorrichtung (7) abgewendeten Enden angetrieben werden und wobei jede Aufhängevorrichtung (9 - 17) in Richtung der Drehachse der Antriebsvorrichtung (7) verschiebbar ist, wobei zur Erzeugung der Schließund Öffnungsbewegung sowie der Festwalzkraft eines jeden Festwalzgeräts (18 bis 26; 111) eine Antriebseinrichtung (49; 122) vorgesehen ist, **dadurch gekennzeichnet, daß** die Antriebseinrichtung (49; 122) eine gegenüber dem doppelten Bauradius (60, 131) einer festzuwalzenden Kurbelwelle (8; 113) größere öffnungsweite (59; 130) bewirkt, daß ein Scherenarm (47; 115) eines jeden Festwalzgeräts (18 bis 26; 111) an einen Schenkel (79) eines an der Aufhängevorrichtung (9 bis 17) schwenkbar angeordneten Winkelhebels (78) angelenkt ist, daß der andere Schenkel (82) des Winkelhebels (78) an eine mit der Aufhängevorrichtung (9 bis 17) verbundene Kolbenzylindereinheit (84) angeschlossen ist und daß den der Drehachse (27) der Antriebsvorrichtung (7) zugewendeten Enden (65, 73; 132, 133) der Scherenarme (46,47; 114,115) je eine Führung (88, 89) zugeordnet ist.

2. Festwalzmaschine nach Anspruch 1, **dadurch gekennzeichnet, daß** die Antriebseinrichtung (49) eines jeden Festwalzgeräts (18 bis 26) aus einem an einem Scherenarm (46) gelagerten zweiarmigen Hebel (52), einem mit dem Scherenarm (46) und dem ersten Arm (53) des zweiarmigen Hebels (52) verbundenen Verstellzylinder (54) und einem mit dem anderen Scherenarm (47) und dem zweiten Arm (55) des zweiarmigen Hebels (52) verbundenen Kraftgerät (56) besteht.

3. Festwalzmaschine nach den Ansprüchen 1 und 2, **dadurch gekennzeichnet, daß** das Kraftgerät (56) mit mehreren quer zur Drehachse (27) der Antriebsvorrichtung (7) angeordneten Druckkolben (57) ausgeführt ist.

4. Festwalzmaschine nach Anspruch 1, **dadurch gekennzeichnet, daß** die Kolbenzylindereinheit (84) einer jeden Aufhängevorrichtung (9 bis 17) mit einer Klemmvorrichtung (87) zum Festklemmen der Kolbenstange (83) ausgebildet ist.

5. Festwalzmaschine nach Anspruch 1, **dadurch gekennzeichnet, daß** die Kolbenzylindereinheit (84) ein Pneumatikzylinder ist.

6. Festwalzmaschine nach Anspruch 1, **dadurch gekennzeichnet, daß** die der Drehachse (27) der Antriebsvorrichtung (7) zugewendeten Enden (65, 73; 132, 133) der Scherenarme (46, 47; 114, 115) mit je einer Führungsrolle (92, 93; 120, 121) versehen sind.

7. Festwalzmaschine nach Anspruch 1, **dadurch gekennzeichnet, daß** zum Positionieren mehrerer Festwalzgeräte (18 bis 26; 111) in ihre Vorschließstellung eine Positioniervorrichtung (96) eingesetzt ist.

8. Festwalzmaschine nach Anspruch 1, **dadurch gekennzeichnet, daß** zum Positionieren eines jeden Festwalzgeräts (18 bis 26; 111) in seine Vorschließstellung ein Schwenkriegel (107) an einer zugeordneten Führung (89) vorgesehen ist.

9. Festwalzmaschine nach Anspruch 1, **dadurch gekennzeichnet, daß** die Antriebsvorrichtung (7) in Richtung ihrer Drehachse (27) verschiebbar angeordnet ist.

10. Festwalzmaschine nach Anspruch 1, **dadurch gekennzeichnet, daß** die Antriebseinrichtung (122) eines jeden Festwalzgeräts (111) aus einem an einem Scherenarm (115) gelagerten Winkelhebel (123), einer mit dem Scherenarm (115) und einem Hebelarm (124) des Winkelhebels (123) verbundenen Kolbenzylinderanordnung (125), einem mit dem anderen Hebelarm (126) des winkelhebels (123) und dem anderen Scherenarm (114) gebildeten Kurvengetriebe (127) und einer im öffnenden Sinne des Festwalzgeräts (111) wirkenden Federeinheit (128) besteht.

## Claims

1. A fixed rolling machine for crankshafts, which contains a driving device (7) for the rotary actuation of a crankshaft to be fixed rolled, and at least one fixed rolling device (18 - 26; 111) with a scissor-type design moveably mounted to a suspension device (9 - 17), wherein the two scissor arms (46, 47; 114, 115) of each fixed rolling device (18 - 26; 111) carry an opposed fixed roller head (66 - 69) and a supporting roller head (74) on the ends facing the rotational axis of the driving device (7), and are driven on the ends facing away from the rotational axis of the driving device (7), and wherein each suspension device (9 - 17) can be shifted in the direction of the rotational axis of the driving device (7), wherein a driving device (49; 122) is provided for generating the closing and opening motion along with the fixed rolling force of each fixed rolling device (18 to 26; 111), **characterized in that** the driving device (49; 122) generates a larger opening width (59; 130) relative to double the overall radius (60; 131) of a crankshaft (8; 113) to be fixed rolled, that a scissor arm (47; 115) of each fixed roller device (18 to 26; 111) is hinged on a leg (79) of an angular lever (78) pivoted to the suspension device (9 to 17), that the other leg (82) of the angular lever (78) is secured to a piston cylinder unit (84) connected with the suspension device (9 to 17), and that one guide (88, 89) each is allocated to the ends (65, 73; 132, 133) of the scissor arms (46, 47; 114, 115) facing the rotational axis (27) of the driving device (7).

2. The fixed rolling machine according to claim 1, **characterized in that** the driving device (49) of each fixed rolling device (18 to 26) consists of a two-armed lever (52) mounted on a scissor arm (46), an adjusting cylinder (54) connected with the scissor arm (46) and the first arm (53) of the two-armed lever (52), and a power-generating device (56) connected with the other scissor arm (47) and the second arm (55) of the two-armed lever (52).

3. The fixed rolling machine according to claims 1 and 2, **characterized in that** the power-generating device (56) is provided with several pressure pistons (57) arranged transverse to the rotational axis (27) of the driving device (7).

4. The fixed rolling machine according to claim 1, **characterized in that** the piston cylinder unit (84) of each suspension device (9 to 17) is designed with a clamping device (87) for clamping the piston rod (83) in place.

5. The fixed rolling machine according to claim 1, **characterized in that** the piston cylinder unit (84) is a pneumatic cylinder.

6. The fixed rolling machine according to claim 1, **characterized in that** the ends (65, 73; 132, 133) of the scissor arms (46, 47; 114, 115) facing the rotational axis (27) of the driving device (7) are each provided with a guide roller (92, 93; 120, 121).

7. The fixed rolling machine according to claim 1, **characterized in that** a positioning device (96) is used to position several fixed rolling devices (18 to 26; 111) in their pre-locked setting.

8. The fixed rolling machine according to claim 1, **characterized in that** a swiveling latch (107) is provided on an allocated guide (89) to position each fixed rolling device (18 to 26; 111) in its pre-locked setting.

9. The fixed rolling machine according to claim 1, **characterized in that** the driving device (7) is arranged so that it can shift in the direction of its rotational axis (27).

10. The fixed rolling machine according to claim 1, **characterized in that** the driving device (122) of each fixed rolling device (111) consists of an angular lever (123) mounted on a scissor arm (115), a piston cylinder device (125) connected with the scissor arm (115) and a lever arm (124) of the angular lever (123), a cam drive (127) formed with the other lever arm (126) of the angular lever (123) and the other scissor arm (114), and a spring-mounted unit (128) that acts in the opening direction of the fixed rolling device (111).

## Revendications

1. Machine d'écrouissage pour vilebrequins, qui contient un dispositif d'entraînement (7) servant à entraîner en rotation un vilebrequin devant être écroui, et au moins un appareil d'écrouissage (18-26; 111) monté de manière à être déplaçable sur un dispositif de suspension (9-17) et agencé à la manière de ciseaux, dans laquelle les deux branches de ciseaux (46, 47; 114, 115) de chaque appareil d'écrouissage (18-26; 111) portent, en vis-à-vis, sur les extrémités tournées vers l'axe de rotation du dispositif d'entraînement (7), une tête de rouleau d'écrouissage (66-69) et une tête de rouleau d'appui (74), et sont entraînés au niveau des extrémités situées à l'opposé de l'axe de rotation du dispositif d'entraînement (7), et dans laquelle chaque dispositif de suspension (9-17) est déplaçable dans la direction de l'axe de rotation du dispositif d'entraînement du dispositif d'entraînement (7), et dans laquelle pour la production du déplacement de fermeture et d'ouverture ainsi que de la force d'écrouissage de chaque appareil d'écrouissage (18 à 26; 111), il est prévu un dispositif d'entraînement (49; 122), **caractérisée en ce que** le dispositif d'entraînement (49; 122) fournit une largeur d'ouverture (59; 130) supérieure au double du rayon de construction (60, 131) d'un vilebrequin devant être écroui (8; 113), qu'une branche de ciseaux (47; 115) de chaque appareil d'écrouissage (18 à 26; 111) est articulée sur une branche (79) d'un levier coudé (78) monté de manière à pouvoir pivoter sur le dispositif de suspension (9 à 17), que l'autre branche (82) du levier coudé (78) est raccordée à une unité à piston et cylindre (84) reliée au dispositif de suspension (9 à 17), et qu'un guide respectif (88, 89) est associé aux extrémités (65, 73; 132, 133) tournées vers l'axe de rotation (27) du dispositif d'entraînement (7), des branches de ciseaux (46, 47; 114, 115).

2. Machine d'écrouissage selon la revendication 1, **caractérisée en ce que** le dispositif d'entraînement (49) de chaque appareil d'écrouissage (18 à 26) est constitué par un levier à deux bras (52), monté sur une branche de ciseaux (46), un vérin de réglage (54) relié à la branche de ciseaux (46) et au premier bras (53) du levier à deux bras (52), et un appareil d'application de force (56), qui est relié à l'autre branche de ciseaux (47) et au second bras (55) du levier à deux bras (52).

3. Machine d'écrouissage selon les revendications 1 et 2, **caractérisée en ce que** l'appareil d'application de force (56) est réalisé avec plusieurs pistons de compression (57) qui sont disposés transversalement par rapport à l'axe de rotation (27) du dispositif d'entraînement (7).

4. Machine d'écrouissage selon la revendication 1, **caractérisée en ce que** l'unité à piston et cylindre (84) de chaque dispositif de suspension (9 à 17) est formée avec un dispositif de serrage (87) pour serrer fermement la tige de piston (83).

5. Machine d'écrouissage selon la revendication 1, **caractérisée en ce que** l'unité à piston et cylindre (84) est un vérin pneumatique.

6. Machine d'écrouissage selon la revendication 1, **caractérisée en ce que** les extrémités (65, 73; 132, 133) tournées vers l'axe de rotation (27) du dispositif d'entraînement (7), des branches de ciseaux (46, 47; 114, 115) sont équipées chacune d'un rouleau de guidage (92, 93; 120, 121).

7. Machine d'écrouissage selon la revendication 1, **caractérisée en ce qu'**un dispositif de positionnement (96) est utilisé pour le positionnement de plusieurs appareils d'écrouissage (18 à 26; 111) dans leur position avant fermeture.

8. Machine d'écrouissage selon la revendication 1, **caractérisée en ce que** pour le positionnement de chaque appareil d'écrouissage (18 à 26; 111) dans sa position avant fermeture, il est prévu un verrou pivotant (116) sur un guide associé (89).

9. Machine d'écrouissage selon la revendication 1, **caractérisée en ce que** le dispositif d'entraînement (7) est disposé de manière à être déplaçable dans la direction de son axe de rotation (27).

10. Machine d'écrouissage selon la revendication 1, **caractérisée en ce que** le dispositif d'entraînement (122) de chaque appareil d'écrouissage (111) est constitué par un levier coudé (123), qui est monté sur une branche de ciseaux (115), d'un dispositif à piston et cylindre (125) qui est relié à la branche de ciseaux (115) et à un bras (124) du levier coudé (123), un mécanisme à cames (127) formé avec l'autre bras (126) du levier coudé (123) et avec l'autre branche de ciseaux (114), et d'une unité à ressort (128) agissant dans le sens de l'ouverture de l'appareil d'écrouissage.
